# EUROPÄISCHE PATENTSCHRIFT

(11) **EP 3 718 124 B1**
(45) Veröffentlichungstag und Bekanntmachung des Hinweises auf die Patenterteilung: **11.06.2025**
(21) Anmeldenummer: 18810985.4
(22) Anmeldetag: 26.11.2018
(51) Int. Cl.: H01H 3/26, H01H 1/36, B60L 3/04, H01H 1/38, H01H 39/00, H01H 3/40, H01H 3/50

(54) **VORRICHTUNG ZUM SCHALTEN EINES MIT HOHER SPANNUNG AUS EINER SPANNUNGSQUELLE BETRIEBENEN ELEKTRISCHEN VERBRAUCHERKREISES**
DEVICE FOR CONNECTING AND DISCONNECTING AN ELECTRICAL LOAD CIRCUIT OPERATED AT HIGH VOLTAGE BY A VOLTAGE SOURCE
DISPOSITIF DE MISE SOUS TENSION D'UN CIRCUIT ÉLECTRIQUE DE CONSOMMATEURS AVEC UNE HAUTE TENSION PROVENANT D'UNE SOURCE DE TENSION

(30) Priorität: 29.11.2017 DE 102017011039
(43) Veröffentlichungstag der Anmeldung: 07.10.2020
(73) Patentinhaber: iie GmbH & Co. KG, 83564 Soyen (DE)
(72) Erfinder: KRESS, Ekkehard, 83512 Wasserburg (DE)
(74) Vertreter: Oberhardt, Knut
(86) Internationale Anmeldenummer: PCT/EP2018/082530
(87) Internationale Veröffentlichungsnummer: WO 2019/105882

(56) Entgegenhaltungen:
- WO-A1-97/37873
- WO-A2-2013/027197
- DE-A1- 102006 015 502
- DE-A1- 102006 029 788
- DE-A1- 19 830 152

## Beschreibung

Die Erfindung betrifft eine Vorrichtung zum Schalten eines mit hoher Spannung aus einer Spannungsquelle betriebenen elektrischen Verbraucherkreises nach dem Oberbegriff von Anspruch 1.

Die Schadstoffemissionen von Verbrennungsmotoren werden in den letzten Jahren immer ernster genommen. Um diese Emissionen verringern zu können wird daher im mobilen Bereich der Einsatz von Elektromotoren stark gefördert. Dabei wird davon ausgegangen, dass der Bedarf an elektrischem Strom verstärkt durch erneuerbare Energien gedeckt werden kann.

Um Verbrennungsmotoren durch Elektromotoren ersetzen zu können, sind in den meisten Fällen große Ströme und hohe Spannungen notwendig. Es wird daher eine Vielzahl von elektrischen Speicherzellen, momentan handelt es sich dabei meist um Lithium-Ionen-Ackus, in Reihe geschaltet.

Die einzelnen Zellen arbeiten üblicherweise mit einer Spannung von ca. 3,6 V. Für die Elektromotoren wird insbesondere beim Einsatz in Kraftfahrzeugen eine Spannung von mehr als 300 V benötigt, so dass mehr als einhundert solcher Zellen entsprechend verschaltet werden müssen. Bei bestimmten Fahrzeugen wird heute auch bereits mit Spannungen von ca. 700 V gearbeitet .

Da die Kapazität von Energiespeichern, die in einem elektrisch angetriebenen Fortbewegungsmittel mitgeführt werden können, relativ gering ist, muss dafür gesorgt werden, dass während der Stillstandzeiten keine Entladung über den Verbraucherkreis stattfindet. Hierzu muss der Verbraucherkreis vollständig von dem Energiespeicher abgetrennt werden.

Normalerweise ist dies auch nicht problematisch, da der Schaltvorgang im Stand stattfindet, wenn keine Last anliegt. Üblicherweise wird dafür ein Schütz verwendet, der die Kontakte über Magnetkraft in der geschlossenen Stellung hält. Je nachdem in welcher Lage der Schütz eingebaut ist, gibt es Fahrzeugen während der Fahrt immer Situationen, in denen eine starke Beschleunigung (beispielsweise beim Durchfahren von Schlaglöchern) auf den Schütz wirkt. Dadurch können sich die Kontakte in einer Zeitspanne öffnen, in der Last anliegt. Das führt dann zu einer Lichtbogenbildung und entsprechendem Abbrand der Kontakte. Solche Schalter haben deshalb keine lange Lebensdauer und müssen oft ausgetauscht werden.

Aus der DE 10 2006 029788 A1 und der DE 10 2006 015502 A1 sind Leistungsschalter für den Niederspannungsbereich bekannt geworden. Diese Leistungsschalter weisen einen Kontaktstift und zumindest zwei Kontaktbuchsen auf. Der Kontaktstift ist in Richtung seiner Längsachse verschieblich. Auf diese Weise lässt sich durch eine Verschiebung des Kontaktstifts ein elektrischer Kontakt zwischen der ersten Kontaktbuchse und der wenigstens zweiten Kontaktbuchse erzeugen.

Der Erfindung liegt die Aufgabe zugrunde, eine Vorrichtung zum Schalten eines mit hoher Spannung aus einer Spannungsquelle betriebenen elektrischen Verbraucherkreises so auszugestalten, dass auf einfache und sichere Weise sowohl eine Verbindung als auch eine Trennung zwischen Verbraucherkreis und Spannungsquelle erfolgen kann. Weiterhin soll das unbeabsichtigte Öffnen der Schalteinrichtung verhindert und die Lebensdauer auf diese Weise stark verlängert werden.

Gelöst wird die Aufgabe gemäß der Erfindung durch eine Vorrichtung zum Schalten eines mit hoher Spannung aus einer Spannungsquelle betriebenen elektrischen Verbraucherkreises mit den Merkmalen von Anspruch 1. Dadurch, dass ein Kontaktbolzen mit der Schubstange eines Linearantriebs verbunden ist und der Kontaktbolzen in einem Schaltergehäuse in wenigstens zwei Stellungen bringbar ist, wobei das Schaltergehäuse an seiner Innenwand wenigstens zwei Kontaktringe aufweist, von denen einer mit einer Spannungsquelle und der andere mit dem Verbraucherkreis verbunden ist, wird eine Schaltvorrichtung geschaffen, die zwischen wenigsten zwei Zuständen hin- und her geschaltet werden kann, wobei die beiden Zustände, unabhängig von der Einbaulage in dem Fortbewegungsmittel, auch durch extreme Bedingungen während der Fahrt nicht unbeabsichtigt geändert werden können. Da alle beabsichtigten Schaltvorgänge ohne Last erfolgen, wird die Bildung eines Lichtbogens sicher unterbunden.

Unter einer hohen Spannung wird hier eine Spannung von einigen hundert Volt verstanden. Der Linearantrieb wird durch eine übliche Bordbatterie mit niedriger Spannung (normalerweise 12 V) versorgt.

Die Erfindung ist in allen elektrisch angetriebenen Fortbewegungsmitteln anwendbar. Als Fortbewegungsmittel sollen hier alle Vorrichtungen zum Befördern von Personen und/oder Gütern zu Land, auf dem Wasser und in der Luft gelten. Als "elektrisch angetrieben" sind alle Fortbewegungsmittel gemeint, die zumindest zum Teil elektrisch angetrieben werden. Hierzu gehören auch die so genannten Hybrid-Fahrzeuge, die zum Teil über einen Elektromotor und zum Teil über einen Verbrennungsmotor angetrieben werden.

Unter Linearantrieb ist jeder Antrieb zu verstehen, der eine Lineare Bewegung erzeugt. Darunter fallen also alle drehenden Antriebe, die eine mit Gewinde versehene Schubstange betätigen, aber ebenso Piezoantriebe oder Solenoide, die direkt eine lineare Bewegung erzeugen. Voraussetzung ist nur, dass die Antriebe mit hohen Kräften arbeiten und auch mit einer hohen Haltekraft ausgestattet sind.

Weitere Einzelheiten und Vorteile der Erfindung ergeben sich aus den Unteransprüchen.

Vorzugsweise ist der Kontaktbolzen in der Offen-Stellung nur mit dem Verbraucherkreis und in der Geschlossen-Stellung mit dem Verbraucherkreis und mit der Spannungsquelle verbunden. Dies ermöglicht genau definierte Schaltzustände, die über einen relativ kurzen Verschiebeweg erreicht werden können. Es muss nur die leitende Verbindung zwischen dem Verbraucherkreis und der Spannungsquelle unterbrochen bzw. geschlossen werden. Um den Kontaktbolzen in dem Schaltergehäuse verschieben zu können, wird ein kräftiger und sicherer Antrieb benötigt. Der Linearantrieb ist deshalb als Schrittmotor ausgebildet und der Rotor weist eine Gewindemutter für die Bewegung der als Gewindestange ausgebildeten Schubstange auf, wobei die Schubstange gegen eine Drehung und die Gewindemutter gegen eine Drehung relativ zum Rotor gesichert ist. Ein Schrittmotor ist heute ein günstig verfügbares Bauteil, das sehr genau angesteuert werden kann. Meist ist nur eine Initialisierung in einer Schaltstellung notwendig, so dass auf Positionssensoren für die anderen Schaltstellungen weitgehend verzichtet werden kann. Durch die Gewindeübersetzung kann die Schubstange durch einen relativ kleinen Motor mit großer Kraft bewegt werden. Auch die Haltekraft ist enorm. Ein Schrittmotor ist auch gegen einfache Manipulationen sicher, da eine bestimmte Phasenfolge zur Ansteuerung benötigt wird.

Aus Sicherheitsgründen soll die Schaltvorrichtung den Verbraucherkreis von der Spannungsquelle trennen, wenn die niedere Betriebsspannung für den Linearantrieb ausfällt und dadurch ein geordnetes Abschalten des Verbraucherkreises nicht mehr möglich wäre. Die Gewindemutter ist zu diesem Zweck konzentrisch zur Drehachse verschiebbare gelagert und die Schubstange in der Geschlossen-Stellung des Kontaktbolzens in Richtung der Offen-Stellung des Kontaktbolzens vorgespannt, wobei die Gewindemutter durch ein Sperrglied in einer Betriebsstellung gehalten wird.

Das Sperrglied muss so ausgebildet sein, dass es bei einem Ausfall der für den geordneten Betrieb der Schaltvorrichtung notwendigen Spannung in eine Stellung bewegt wird die eine Verschiebung der Gewindemutter in eine Außerbetriebsstellung zulässt. Vorteilhaft ist das Sperrglied deshalb als Solenoid ausgebildet, welches sich bei anliegender Spannung in der Sperrstellung befindet und sich bei einem Abschalten der anliegenden Spannung in die Freigabestellung bewegt. Wenn also die Betriebsspannung für das geordnete Abschalten der Schaltvorrichtung ausfällt, fällt auch das Solenoid ab und gibt die Gewindemutter frei, die sich dann zusammen mit der unter Vorspannung stehenden Schubstange bewegt und den Kontaktbolzen in dem Schaltergehäuse in die Offen-Stellung bringt. Um einen Lichtbogen zu vermeiden, muss eine große Vorspannkraft erzeugt werden, die die Schubstange stark beschleunigt und den Kontaktbolzen schnell bewegt.

Der Verbraucherkreis soll aber nicht nur bei einem Ausfall der Betriebsspannung für die Schaltvorrichtung von der Spannungsquelle abgetrennt werden, sondern auch dann, wenn das Fortbewegungsmittel in einen Unfall verwickelt wird. Nur so lässt sich verhindern, dass die hohen Spannungen mit denen der Verbraucherkreis gespeist wird, auf Bauteile übertragen werden, die mit Menschen oder evtl. mit Kraftstoff oder anderen leicht brennbaren Substanzen in Berührung kommen. Besonders vorteilhaft steht deshalb mit dem Schaltergehäuse ein Gasgenerator in Verbindung, der über eine Steuerung mit einem Aufprallsensor verbunden ist. Der durch den Gasgenerator erzeugte Gasdruck entwickelt eine große Kraft, so dass eine schnelle Bewegung des Kontaktbolzens in die Offen-Stellung erfolgen kann. Diese hohe Geschwindigkeit hilft dabei, einen Lichtbogen zu vermeiden. Aber auch, dass das Gas bei der Trennung der Verbindung zumindest auch einen Kontaktbolzen umströmt, verhindert den Aufbau eines Lichtbogens (Funkenlöschung).

Um den Kontaktbolzen durch den von dem Gasgenerator erzeugten Gasdruck aus der Geschlossen-Stellung in die Offen-Stellung bewegen zu können, wäre es möglich, die Schubstange und die Gewindemutter mit einem relativ steilen Gewinde zu versehen. Da in diesem Fall der Rotor mit gedreht werden müsste, weist das System eine gewisse Trägheit auf und der Abschaltvorgang würde eine längere Zeitspanne in Anspruch nehmen. Bei einer vorteilhaften Ausführung ist daher eine Sollbruchstelle vorgesehen. Die Bewegung des Kontaktbolzens bei einem Unfall in die Offen-Stellung kann auf diese Weise ohne eine Drehung des Rotors sehr schnell erfolgen.

Die Sollbruchstelle kann beispielsweise direkt in der Schubstange vorgesehen sein. Dazu könnten zwei konzentrische Schubstangenteile über eine Pressung miteinander verbunden sein. Sobald eine große Kraft auf den Kontaktbolzen wirkt, schieben sich dann die beiden Schubstangenteile ineinander. Besonders vorteilhaft ist aber der Kontaktbolzen als einseitig geschlossener Hohlzylinder ausgebildet und die Sollbruchstelle weist eine sternförmige Verbindung zwischen der Schubstange und der offenen Seite des Hohlzylinders auf. Bei dieser Ausführungsform gibt es keine Mischzustände; es ist klar erkennbar, ob die Sollbruchstelle in Takt oder gebrochen ist.

Vorteilhaft ist an der Innenwand des Schaltergehäuses ein dritter Kontaktring vorgesehen, der mit Erde, bzw. Masse verbunden ist. Auf diese Weise besteht die Möglichkeit, in der Offen-Stellung der Schaltvorrichtung den Verbraucherkreis mit der Masse zu verbinden. Bevorzugt ist für diesen Fall zwischen dem dritten Kontaktring und der Masse ein Widerstand vorgesehen, so dass nach dem Abschalten ein langsamer Abfluss der Ladung erfolgen kann.

Bevorzugt ist der dritte Kontaktring jedoch nur für einen Unfalls vorgesehen, so dass in der normalen Offen-Stellung der Schaltvorrichtung keine leitende Verbindung zwischen dem Kontaktbolzen und dem dritten Kontaktring besteht. Um Personen nach einem Unfall nicht zu gefährden, soll die Ladung aus dem Verbraucherkreis nach so einem Ereignis möglichst schnell abgeführt werden. Zwischen dem dritten Kontaktring und der Masse darf bei dieser Ausführungsform kein Widerstand vorgesehen sein. Der Kontaktbolzen wird bei Zündung des Gasgenerators in eine Not-Stellung bewegt, in der er den Verbraucherkreis mit Erde, bzw. Masse verbindet. In dieser Notstellung verbindet der Kontaktbolzen den Kontaktring, der mit dem Verbraucherkreis verbunden ist, mit dem dritten Kontaktring. Es spielt keinerlei Rolle, wenn es durch einen hohen Strom zu einer Verschweißung kommen sollte, da die Schaltvorrichtung nach einem Unfall sowieso auszutauschen ist.

Die erfindungsgemäße Schaltvorrichtung kann auch an beiden Anschlüssen des Verbraucherkreises vorgesehen sein, so dass der Verbraucherkreis nach einem Unfall sowohl mit seinem Pluspol als auch mit seinem Minuspol auf Masse gelegt ist.

Weitere Einzelheiten und Vorteile der Erfindung ergeben sich aus der Beschreibung eines Ausführungsbeispiels, das anhand der Zeichnung eingehend erläutert wird.

Es zeigt:
- Fig. 1: eine schematische Schnittansicht eines erfindungsgemäßen Ausführungsbeispiels mit dem Schalter in Offen-Stellung,
- Fig. 2: das Ausführungsbeispiel aus Fig. 1 mit dem Schalter in Geschlossen-Stellung,
- Fig. 3: das in den Figuren 1 und 2 gezeigte Ausführungsbeispiel nach einer Notabschaltung und
- Fig. 4: das Ausführungsbeispiel nach der Aktivierung des Gasgenerators, beispielsweise nach einem Unfall.

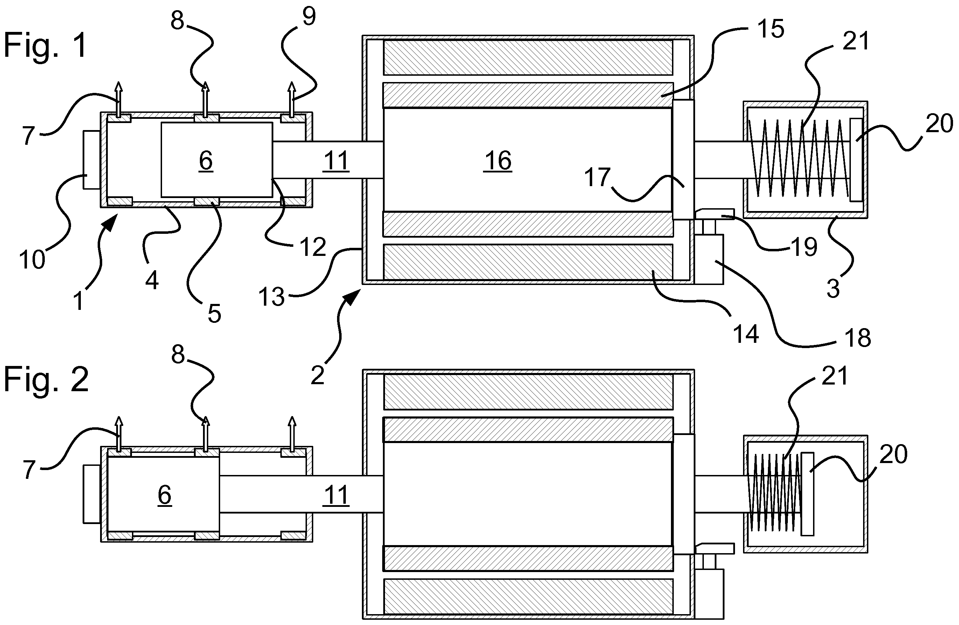

Das in Fig. 1 gezeigte Ausführungsbeispiel weist einen Hauptschalter 1 auf, der über einen Linearantrieb 2 geschaltet wird. Der Linearantrieb 2 besitzt einen ortsfest in dem Antriebsgehäuse 13 montierten Stator 14 und einen innerhalb des Stators 14 drehbar gelagerten Rotor 15. Konzentrisch zur Drehachse des Rotors 15 ist eine Gewindemutter 16 vorgesehen, die drehfest mit dem Rotor 15 verbunden ist, aber entlang der Drehachse des Rotors 15 verschiebbar gelagert ist.

Ebenfalls konzentrisch zur Drehachse des Rotors 15 ist eine Schubstange 11 vorgesehen, die so gelagert ist, dass sie entlang der Drehachse verschiebbar ist, aber an der Drehung des Rotors 15 und der drehfest damit verbundenen Gewindemutter 16 nicht teilnimmt. Die Schubstang 11 ist im Bereich der Gewindemutter 16 mit einem Außengewinde versehen, welches in Wirkkontakt mit dem Innengewinde der Gewindemutter 16 steht. An ihrem dem Hauptschalter 1 gegenüberliegenden Ende ist die Schubstange 11 mit einem Schubstangenflansch 20 versehen. Dieser ragt in ein Federgehäuse 3, welches ortsfest zu dem Antriebsgehäuse 13 montiert ist. Zwischen dem Schubstangenflansch 20 und der dem Antriebsgehäuse 13 zugewandten Innenwand des Federgehäuses 3 befindet sich die Feder 21, die den Schubstangenflansch 20 leicht gegen die dem Antriebsgehäuse gegenüberliegende Innenwand des Federgehäuses 3 vorspannt.

Mit der Gewindemutter 16 ist der runde Mutterflansch 17 verbunden, der sich in einer entsprechenden Ausnehmung des Antriebsgehäuses 13 befindet. Neben der Ausnehmung für den Mutterflansch 17 ist an dem Antriebsgehäuse 13 ein Solenoid 18 befestigt. Dieses Solenoid 18 ist mit einem Sperrhebel 19 versehen, der dann, wenn das Solenoid 18 bestromt wird, den Mutterflansch 17 sperrt und die Gewindemutter 16 auf diese Weise an einer Verschiebung in Richtung der Drehachse des Rotors 15 hindert.

Der Hauptschalter 1 besitzt ein fest montiertes Schaltergehäuse 4 und einen innerhalb des Schaltergehäuses 4 verschieblich gelagerten Kontaktbolzen 6. Der Kontaktbolzen 6 ist als Hohlzylinder ausgebildet, der an seiner der Schubstange 11 abgewandten Stirnfläche geschlossen ist. An seiner offenen Seit ist er mit der Schubstange 11 über eine Sollbruchstelle 12 verbunden.

Die Sollbruchstelle 12 ist in der Zeichnung nicht explizit ausgeführt, eine mögliche Ausführungsform soll im Folgenden aber erläutert werden. Die Sollbruchstelle 12 ist vorzugsweise als eigenes Bauteil ausgeführt. Sie weist einen inneren Ring auf, der mit der Schubstange 11 verbunden wird. Ebenso weist sie einen äußeren Ring auf, der mit dem offenen Rand des Hohlzylinders des Kontaktbolzens 6 verbunden wird. Der innere und der äußere Rind sind über drei Strahlen mit einander verbunden. Die Strahlen sind so ausgeführt, dass sie dann abreißen, wenn zwischen dem inneren und dem äußeren Ring eine vorbestimmte Kraft wirkt. Die Strahlen bilden deshalb die eigentliche Sollbruchstelle aus.

Das Schaltergehäuse 4 weist in seiner Innenwand drei ringförmige Vertiefungen auf, in die die Kontaktringe 5 eingesetzt sind. Der linke Kontaktring steht dabei in Kontakt mit einem Anschluss 7 zur Spannungsquelle, der Mittlere mit einem Anschluss 8 zum Verbraucherkreis und der Rechte mit einem Anschluss 9 zur Masse. Der Kontaktbolzen 6 ist so ausgestaltet, dass er jeweils zwei Kontaktringe elektrisch mit einander verbinden kann.

An der dem Antrieb 2 gegenüberliegenden Seite das Schaltergehäuses 4 ist ein Gasgenerator 10 befestigt. Dieser steht über hier nicht gezeigte Öffnungen mit dem Innenraum des Schaltergehäuses 4 in Verbindung. Vorzugsweise sind noch zischen dem linken und dem mittleren Kontaktring, dicht neben dem mittleren Kontaktring Gasaustrittsöffnungen vorhanden, die hier aber ebenfalls nicht gezeigt sind.

Im Folgenden soll anhand der unterschiedlichen Stellungen der erfindungsgemäßen Vorrichtung in den Figuren 1 bis 4 die Funktion anhand des Einsatzes in einem Elektrofahrzeug detailliert beschrieben werden. Es wird davon ausgegangen, dass das Elektrofahrzeug eine 12 V-Bordbatterie und eine Spannungsquelle mit einer Ausgangsspannung von ca. 400 V besitzt. Mit der Spannungsquelle wird der Verbraucherkreis, in diesem Fall ein Elektromotor oder mehrere Elektromotoren, versorgt.

In Fig. 1 ist die Schaltvorrichtung in Offen-Stellung gezeigt. In dieser Position kontaktiert der Kontaktbolzen 6 ausschließlich den Anschluss 8 zum Verbraucherkreis. An dem Verbraucherkreis liegt daher keine Spannung an. Der Zündschlüssel befindet sich bereits im Zündschloss, so dass das Solenoid 18 über die 12 V-Bordbatterie bestromt wird. Der Sperrhebel 19 befindet sich daher in Sperrposition, in der die Gewindemutter 16 über den Mutterflansch 17 an einer Verschiebung entlang der Drehachse des Rotors 15 gehindert wird. Nach einem Drehen des Zündschlüssels wird auch der Linearantrieb 2 über die 12 V-Bordbatterie bestromt. Durch die Drehung des Rotors 15 zusammen mit der Gewindemutter 16 in Öffnungsrichtung wird die Schubstange 11 nach links verschoben.

Die Position nach Abschluss dieser Bewegung ist in Fig. 2 gezeigt. Der Hauptschalter 1 befindet sich in der Geschlossen-Stellung. Der über die Sollbruchstelle 12 mit der Schubstange 11 verbundene Kontaktbolzen 6 ist ganz auf der linken Seite des Schaltergehäuses 4 angekommen. Dabei stellt er eine elektrisch leitende Verbindung zwischen dem Anschluss 7 zur Spannungsquelle und dem Anschluss 8 zum Verbraucherkreis her.

Auch der Schubstangenflansch 20 hat an der Bewegung der Schubstange 11 teilgenommen und befindet sich links von der Ausgangsstellung. Dabei wurde die Feder 21 gespannt. Die Schubstange 11 mit dem Kontaktbolzen 6 und die Gewindemutter 16 stehen nun unter Vorspannung in Öffnungsrichtung des Hauptschalters 1. Über den Sperrhebel 19 und den Mutterflansch 17 wird jedoch eine entsprechende Öffnungsbewegung von Schubstange 11, Kontaktbolzen 6 und Gewindemutter 16 verhindert.

Beim Abstellen des Elektrofahrzeugs wird beim Zurückdrehen des Zündschlüssels der Linearmotor 2 so bestromt, dass der Rotor 15 in Öffnungsrichtung dreht. Dabei werden die Schubstange 11 und der Kontaktbolzen 6 wieder in die in Fig. 1 gezeigte Stellung geschoben. Der Hauptschalter 1 befindet sich wieder in seiner Offen-Stellung.

Beim Abziehen des Zündschlüssels aus dem Zündschloss wird dann auch die Verbindung des Solenoids 18 mit der 12 V-Bordbatterie unterbrochen, so dass der Sperrhebel 19 in eine nicht in Fig. 1 gezeigte Freigabestellung verfährt. Dies hat jedoch keinen Einfluss auf die Position von Gewindemutter 16 und Schubstange 11, da der Schubstangenflansch 20 bereits an der Innenwand des Federgehäuses 3 anliegt und nicht weiter nach links verschoben werden kann.

Sollte die 12 V-Bordbatterie während des Betriebs des Elektrofahrzeugs (siehe Fig. 2) aus beliebigem Grund ausfallen, wäre es nicht mehr möglich die Spannungsquelle von dem Verbraucherkreis zu trennen, da der Linearantrieb 2 nicht mehr bestromt werden kann. Für diese Situation sind die Feder 21 und das Solenoid 18 vorgesehen. Ausgehend von der in Fig. 2 gezeigten Betriebsstellung fällt bei einem Ausfall der 12 V-Bordspannung das Solenoid 18 ab und der Sperrhebel 19 bewegt sich in seine Freigabestellung.

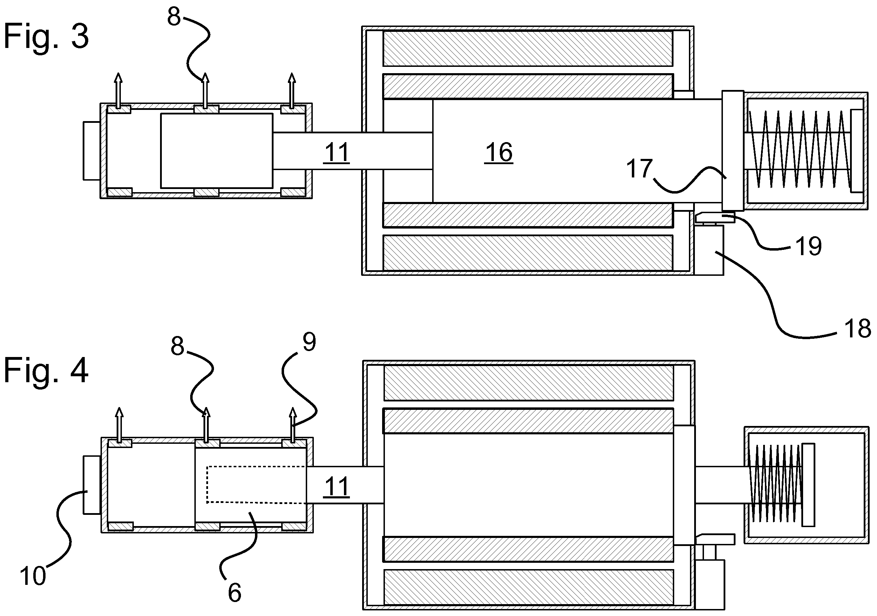

Dadurch wirkt die Kraft der Feder 21 nun über den Schubstangenflansch 20 auf die Schubstange 11 und verschiebt diese zusammen mit der Gewindemutter 16 und dem Kontaktbolzen 6 nach rechts bis der Schubstangenflansch 20 wieder an der Innenwand des Federgehäuses 3 anliegt. Der Hauptschalter 1 befindet sich nun wie in Fig. 1 in der Offen-Stellung. Die Verbindung zwischen Spannungsquelle und Verbraucherkreis ist folglich unterbrochen. Die Stellung nach einem Ausfall der 12 V-Bordspannung ist in Fig. 3 gezeigt.

Sobald eine Reparatur durchgeführt ist, kann das Elektrofahrzeug wieder in Betrieb gesetzt werden. Beim Einstecken des Zündschlüssels in das Zündschloss kann der Sperrhebel 19 nicht in seine Sperrstellung bewegt werden, da er von dem Mutterflansch 17 daran gehindert wird. Die hier nicht gezeigte Steuerung bestromt den Linearntrieb 2 deshalb in Öffnungsrichtung. Da die Schubstange 11 nicht weiter nach rechts verschoben werden kann, wird die Gewindemutter 16 nach links zurück in den Rotor 15 gedrückt. Nach Erreichen der normalen Stellung der Gewindemutter 16 (wie in den Figuren 1, 2 und 4) kann der Sperrhebel 19 nun wieder in seine Sperrstellung rücken und das Elektrofahrzeug ist wieder startklar (siehe Fig. 1).

Wird das Elektrofahrzeug in einen Unfall verwickelt, soll der Verbraucherkreis sehr schnell von der Spannungsquelle getrennt werden. Wiederum ausgehend von der Betriebsstellung in Fig. 2 wird über einen Aufprallsensor und die Steuerung der Gasgenerator 10 gezündet. Das entstehende Gas strömt in das Schaltgehäuse 4 und baut dort einen hohen Druck auf. Dadurch bricht die Sollbruchstelle 12 und der Kontaktbolzen 6 wird nach recht gedrückt bis er an der dem Linearantrieb 2 zugewandten Seitenwand des Schaltgehäuses 4 anliegt. Diese Stellung ist in Fig. 4 gezeigt. Damit der Innendruck nicht zu einer Explosion des Schaltergehäuses 4 führt, sind neben dem mittleren Kontaktring die hier nicht gezeigten Gasaustrittsöffnungen vorgesehen.

Der Kontaktbolzen 6 stellt in Fig. 4 eine Verbindung zwischen dem Anschluss 8 zum Verbraucherkreis und dem Anschluss 9 zur Masse her. Auf diese Weise kann bei einem Unfall nicht nur der Verbraucherkreis von der Spannungsquelle getrennt, sondern auch noch entladen werden. Idealerweise ist je eine erfindungsgemäße Schaltvorrichtung zwischen dem Plus-Pol der Spannungsquelle und dem Verbraucherkreis und dem Minus-Pol der Spannungsquelle und dem Verbraucherkreis vorgesehen. In diesem Fall wird bei einem Unfall sowohl der Minus-Anschluss als auch der Plus-Anschluss des Verbraucherkreises auf Masse gelegt.

Für eine Wiederinbetriebnahme muss nach dem Auslösen des Gasgenerators 10 die Schaltvorrichtung ausgetauscht werden.

Die Anwendung der Erfindung ist aber nicht nur auf Fortbewegungsmittel beschränkt, sie lässt sich auch in ortsfesten Anlagen verwenden. So kann es beispielsweise sinnvoll sein, eine Photovoltaik-Anlage über eine oder zwei der erfindungsgemäßen Schaltvorrichtungen von dem Verbraucherkreis mit Inverter und/oder Stromspeicher zu trennen.

### Bezugszeichenliste:

- 1: Hauptschalter
- 2: Linearantrieb
- 3: Federgehäuse
- 4: Schaltergehäuse
- 5: Kontaktringe
- 6: Kontaktbolzen
- 7: Anschluss zur Spannungsquelle
- 8: Anschluss zum Verbraucherkreis
- 9: Anschluss zur Masse
- 10: Gasgenerator
- 11: Schubstange
- 12: Sollbruchstelle
- 13: Antriebsgehäuse
- 14: Stator
- 15: Rotor
- 16: Sechskantmutter
- 17: runder Mutterflansch
- 18: Solenoid
- 19: Sperrhebel
- 20: Schubstangenflansch
- 21: Feder

## Patentansprüche

1. Vorrichtung zum Schalten eines mit hoher Spannung aus einer Spannungsquelle betriebenen elektrischen Verbraucherkreises in einem elektrisch angetriebenen Fortbewegungsmittel durch einen mit niedriger Spannung betriebenen Antrieb, wobei ein Kontaktbolzen (6) mit der Schubstange (11) eines Linearantriebs (2) verbunden ist und der Kontaktbolzen (6) in einem Schaltergehäuse (4) in wenigstens zwei Stellungen bringbar ist, wobei das Schaltergehäuse (4) an seiner Innenwand wenigstens zwei Kontaktringe (5) aufweist, von denen einer mit der Spannungsquelle (7) und der andere mit dem Verbraucherkreis (8) verbunden ist, wobei der Lienearantrieb (2) als Schrittmotor ausgebildet ist, **dadurch gekennzeichnet, dass** der Rotor (15) eine Gewindemutter (16) für die Bewegung der als Gewindestange ausgebildeten Schubstange (11) aufweist, wobei die Schubstange (11) gegen eine Drehung und die Gewindemutter (16) gegen eine Drehung relativ zum Rotor (15) gesichert ist.

2. Vorrichtung nach Anspruch 1, **dadurch gekennzeichnet, dass** der Kontaktbolzen (6) in der Offen-Stellung nur mit dem Verbraucherkreis (8) und in der Geschlossen-Stellung mit dem Verbraucherkreis (8) und mit der Spannungsquelle (7) verbunden ist.

3. Vorrichtung nach Ansprüche 2, **dadurch gekennzeichnet, dass** die Gewindemutter (16) konzentrisch zur Drehachse verschiebbar gelagert und die Schubstange (11) in der Geschlossen-Stellung des Kontaktbolzens (6) in Richtung der Offen-Stellung des Kontaktbolzens (6) vorgespannt ist, wobei die Gewindemutter (16) durch ein Sperrglied (18) in einer Betriebsstellung gehalten wird.

4. Vorrichtung nach Ansprüche 3, **dadurch gekennzeichnet, dass** das Sperrglied als Solenoid (18) ausgebildet ist, welches sich bei anliegender Spannung in der Sperrstellung befindet und sich bei einem Abschalten der anliegenden Spannung in die Freigabestellung bewegt.

5. Vorrichtung nach einem der Ansprüche 1 bis 4, **dadurch gekennzeichnet, dass** mit dem Schaltergehäuse (4) ein Gasgenerator (10) in Verbindung steht, der über eine Steuerung mit einem Aufprallsensor verbunden ist.

6. Vorrichtung nach einem der Ansprüche 1 bis 5, **dadurch gekennzeichnet, dass** der Kontaktbolzen (6) eine Sollbruchstelle (12) zu der Schubstange (11) aufweist.

7. Vorrichtung nach Anspruch 6, **dadurch gekennzeichnet, dass** der Kontaktbolzen (6) als einseitig geschlossener Hohlzylinder ausgebildet ist und die Sollbruchstelle (12) eine sternförmige Verbindung zwischen der Schubstange (11) und der offenen Seite des Hohlzylinders aufweist.

8. Vorrichtung nach einem der Ansprüche 1 bis 7, **gekennzeichnet dadurch, dass** an der Innenwand des Schaltergehäuses (4) ein dritter Kontaktring (5) vorgesehen ist, der mit Erde, bzw. Masse (9) verbunden ist.

9. Vorrichtung nach einem der Ansprüche 6 bis 8, **gekennzeichnet dadurch, dass** der Kontaktbolzen (6) bei Zündung des Gasgenerators (10) in eine Not-Stellung bewegt wird, in der er den Verbraucherkreis (8) mit Erde, bzw. Masse (9) verbindet.

## Claims

1. Device for the switching of an electrical consumer load circuit, operated at high voltage from a voltage source, in an electrically-driven means of locomotion, by a drive operated at low voltage, wherein a contact bolt (6) is connected to the push rod (11) of a linear drive (2), and the contact bolt (6) can be brought into at least two positions in a switching housing (4), wherein the switching housing (4) has at least two contact rings (5) on its inner wall, of which one is connected to the voltage source (7), and the other is connected to the consumer load circuit (8), wherein the linear drive (2) is designed as a stepper motor, **characterised in that** the rotor (15) has a threaded nut (16) for the movement of the push rod (11), designed in the form of a threaded rod, wherein the push rod (11) is secured against rotation, and the threaded nut (16) is secured against rotation, relative to the rotor (15).

2. Device in accordance with Claim 1, **characterised in that** in the open position, the contact bolt (6) is only connected to the consumer load circuit (8), and in the closed position, is connected to the consumer load circuit (8) and the voltage source (7).

3. Device in accordance with Claim 2, **characterised in that** the threaded nut (16) is mounted such that it can be displaced concentrically with respect to the axis of rotation, and, in the closed position of the contact bolt (6), the push rod (11) is pre-loaded in the direction of the open position of the contact bolt (6), wherein the threaded nut (16) is held in an operating position by a blocking element (18).

4. Device in accordance with Claim 3, **characterised in that** the blocking element is designed in the form of a solenoid (18), which, when voltage is applied, is located in the blocking position, and, when the applied voltage is switched off, moves into the release position.

5. Device in accordance with one of the Claims 1 to 4, **characterised in that** a gas generator (10) is connected to the switching housing (4), which is connected to an impact sensor via a control unit.

6. Device in accordance with one of the Claims 1 to 5, **characterised in that** the contact bolt (6) has a predetermined breaking point (12) with respect to the push rod (11).

7. Device in accordance with Claim **6, characterised in that** the contact bolt (6) is designed in the form of a hollow cylinder, closed on one side, and the predetermined breaking point (12) has a star-shaped connection between the push rod (11) and the open side of the hollow cylinder.

8. Device in accordance with one of the Claims 1 to 7, **characterised in that** a third contact ring (5) is provided on the inner wall of the switching housing (4), which is connected to earth or ground (9).

9. Device in accordance with one of the Claims 6 to 8, **characterised in that** the contact bolt (6) is moved into an emergency position when the gas generator (10) is ignited, in which position it connects the consumer load circuit (8) to earth or ground (9).

## Revendications

1. Dispositif de mise sous tension d'un circuit électrique de consommateurs mû par une haute tension provenant d'une source de tension dans un moyen de transport à entraînement électrique par un entraînement mû par une basse tension, dans lequel un tourillon de contact (6) est relié à la tige de poussée (11) d'un entraînement linéaire (2) et le tourillon de contact (6) dans un boîtier de commutateur (4) peut être amené dans au moins deux positions, dans lequel le boîtier de commutateur (4) présente sur sa paroi interne au moins deux bagues de contact (5), dont l'une est reliée à la source de tension (7) et l'autre au circuit d'utilisateurs (8), dans lequel l'entraînement linéaire (2) est conçu comme un moteur pas à pas, **caractérisé en ce que** le rotor (15) présente un écrou fileté (16) pour le mouvement de la tige de poussée (11) conçue comme une tige filetée, dans lequel la tige de poussée (11) est sécurisée contre une rotation et l'écrou fileté (16) est sécurisé contre une rotation par rapport au rotor (15).

2. Dispositif selon la revendication 1, **caractérisé en ce que** le tourillon de contact (6) dans la position ouverte n'est relié qu'au circuit d'utilisateurs (8) et, dans la position fermée, est relié au circuit d'utilisateurs (8) et à la source de tension (7).

3. Dispositif selon la revendication 2, **caractérisé en ce que** l'écrou fileté (16) est logé de manière à pouvoir coulisser concentriquement à l'axe de rotation et la tige de poussée (11) est précontrainte dans la position fermée du tourillon de contact (6) dans le sens de la position ouverte du tourillon de contact (6), dans lequel l'écrou fileté (16) est maintenu dans une position de fonctionnement par un organe de blocage (18).

4. Dispositif selon la revendication 3, **caractérisé en ce que** l'organe de blocage est conçu comme un solénoïde (18), lequel se trouve, sous tension, dans la position de blocage et, lors d'une coupure de la tension appliquée, se déplace en position de dégagement.

5. Dispositif selon l'une des revendications 1 à 4, **caractérisé en ce qu'**un générateur de gaz (10), qui est relié par une commande à un détecteur d'impact, est en lien avec le boîtier de commutateur (4).

6. Dispositif selon l'une des revendications 1 à 5, **caractérisé en ce que** le tourillon de contact (6) présente un point destiné à la rupture (12) vers la tige de poussée (11).

7. Dispositif selon la revendication 6, **caractérisé en ce que** le tourillon de contact (6) est conçu comme un cylindre creux fermé d'un côté et le point destiné à la rupture (12) présente une liaison en forme d'étoile entre la tige de poussée (11) et le côté ouvert du cylindre creux.

8. Dispositif selon l'une des revendications 1 à 7, **caractérisé en ce qu'**est prévue sur la paroi interne du boîtier de commutateur (4) une troisième bague de contact (5) qui est reliée à la terre, respectivement à la masse (9).

9. Dispositif selon l'une des revendications 6 à 8, **caractérisé en ce que** le tourillon de contact (6) se déplace dans une position d'urgence lors de l'allumage du générateur de gaz (10), dans laquelle il relie le circuit d'utilisateurs (8) à la terre, respectivement à la masse (9).
